# EUROPEAN PATENT APPLICATION

(11) **EP 4 727 110 A1**
(43) Date of publication of application: **15.04.2026**
(21) Application number: 25172551.1
(22) Date of filing: 25.04.2025
(51) Int. Cl.: H04N 1/60, G06F 3/12, G06V 10/98

(54) **INFORMATION PROCESSING SYSTEM, INFORMATION PROCESSING PROGRAM, AND INFORMATION PROCESSING METHOD**

(30) Priority: 08.10.2024 JP 2024176712
(71) Applicant: FUJIFILM Business Innovation Corp., Minato-ku Tokyo (JP)
(72) Inventor: TAKAHATA, Koji, Yokohama-shi, Kanagawa (JP)
(74) Representative: Becker Kurig & Partner Patentanwälte mbB

(57) **Abstract**

An information processing system includes a processor configured to input new input information including information related to a print job to be newly processed to a trained model that is trained in advance to output, in a case where input information including information related to a print job is input, information related to a color difference between a printed image formed on a printed matter by executing the print job and a target image that is a printing target in the print job, and output information related to a color difference between a printed image formed by executing the print job to be newly processed and a target image that is a printing target in the print job to be newly processed.

## Description

### BACKGROUND OF THE INVENTION

### (i) Field of the Invention

The present disclosure relates to an information processing system, an information processing program, and an information processing method.

### (ii) Description of Related Art

JP2023-136927A discloses a printed matter inspection system including a processor configured to inspect the quality of printed matter, and a display unit that displays a result of the inspection, in which the processor is configured to, by reading and executing a program, compare a printed image obtained by scanning the printed matter of a page to be inspected among pages constituting a job with a reference image created using rasterized data of the page to be inspected, inspect a first defect present in the printed image at a preset initial level or a first inspection level which is a level set by a user, automatically inspect a second defect present in the printed image at a second inspection level which is different from the first inspection level, and display the first defect and the second defect on the display unit in a distinguishable manner.

In a case of processing a print job, even in a case where the setting of the print job is the same, the color tone of the printed image formed on the printed matter is changed in accordance with the variation in the printing environment such as the room temperature and humidity, the type of print paper, and the continuation of printing. Due to the color tone variation of the printed image, the color difference between the printed image and the target image that is the printing target in the print job varies. In a case where the color difference exceeds the allowable amount, the inspection is determined to be NG. In a case where the inspection NG is likely to be generated, unnecessary paper is generated.

In order to prevent the color difference from exceeding the allowable amount, a printing factory periodically performs a work of returning the variation in color tone, which is called calibration, for example, before the first print job of the day.

### SUMMARY OF THE INVENTION

Since printing cannot be performed during calibration, for example, it is preferable to perform calibration in accordance with a timing at which the color difference exceeds the allowable amount from the viewpoint of productivity. However, the color difference cannot be confirmed without actually printing, and information related to a color difference between the printed image and the target image cannot be obtained before printing.

An object of the present disclosure is to provide an information processing system, an information processing program, and an information processing method that can predict information related to a color difference between a printed image and a target image.

According to a first aspect of the present disclosure, there is provided an information processing system including: a processor configured to: input new input information including information related to a print job to be newly processed to a trained model that is trained in advance to output, in a case where input information including information related to a print job is input, information related to a color difference between a printed image formed on a printed matter by executing the print job and a target image that is a printing target in the print job, and output information related to a color difference between a printed image formed by executing the print job to be newly processed and a target image that is a printing target in the print job to be newly processed.

According to a second aspect of the present disclosure, in the information processing system according to the first aspect, the information related to a print job may include information related to the target image that is a printing target in the print job.

According to a third aspect of the present disclosure, in the information processing system according to the first or second aspect, the information related to a print job may include information related to a setting of the print job.

According to a fourth aspect of the present disclosure, in the information processing system according to any one of the first to third aspects, information related to a setting of the print job may include information related to print paper.

According to a fifth aspect of the present disclosure, in the information processing system according to any one of the first to fourth aspects, the information related to a print job may include information related to a printing apparatus that processes the print job.

According to a sixth aspect of the present disclosure, in the information processing system according to any one of the first to fifth aspects, the information related to a print job may include information related to execution time of calibration executed immediately before the print job.

According to a seventh aspect of the present disclosure, in the information processing system according to any one of the first to sixth aspects, the information related to a print job may include information related to an environment for processing the print job.

According to an eighth aspect of the present disclosure, in the information processing system according to any one of the first to seventh aspects, the information related to a print job may include information related to a color difference for each of print jobs processed earlier than the print job.

According to a ninth aspect of the present disclosure, in the information processing system according to any one of the first to eighth aspects, the processor may be further configured to output a notification for recommending execution of calibration based on a result of comparing the information related to a color difference output for the newly processed print job with a predetermined threshold value.

According to a tenth aspect of the present disclosure, in the information processing system according to any one of the first to ninth aspects, the processor may be configured to: output the information related to a color difference by inputting the new input information to the trained model for each of a plurality of print jobs to be newly and continuously processed, and output a notification for recommending execution of calibration based on a result of comparing the output information related to a color difference with a predetermined threshold value for each of the plurality of print jobs to be newly and continuously processed.

According to an eleventh aspect of the present disclosure, in the information processing system according to the tenth aspect, the processor may be configured to, in a case of outputting the notification for recommending execution of calibration, output a screen for receiving a selection of whether to stop a process immediately before the print job in which the output information related to a color difference exceeds the threshold value or to recommend execution of the calibration before processing the plurality of print jobs to be newly and continuously processed.

According to a twelfth aspect of the present disclosure, there is provided an information processing program causing a computer to execute a process including: inputting new input information including information related to a print job to be newly processed to a trained model that is trained in advance to output, in a case where input information including information related to a print job is input, information related to a color difference between a printed image formed on a printed matter by executing the print job and a target image that is a printing target in the print job, and outputting information related to a color difference between a printed image formed by executing the print job to be newly processed and a target image that is a printing target in the print job to be newly processed.

According to a thirteenth aspect of the present disclosure, there is provided an information processing method including: inputting new input information including information related to a print job to be newly processed to a trained model that is trained in advance to output, in a case where input information including information related to a print job is input, information related to a color difference between a printed image formed on a printed matter by executing the print job and a target image that is a printing target in the print job, and outputting information related to a color difference between a printed image formed by executing the print job to be newly processed and a target image that is a printing target in the print job to be newly processed.

According to the first aspect of the present disclosure, it is possible to predict the information related to a color difference between the printed image and the target image, which is generated in the print job.

According to the second aspect of the present disclosure, it is possible to predict the information related to a color difference between the printed image and the target image, which is generated in the print job, based on the information related to the target image that is a printing target in the print job.

According to the third aspect of the present disclosure, it is possible to predict the information related to a color difference between the printed image and the target image, which is generated in the print job, based on the information related to a setting of the print job.

According to the fourth aspect of the present disclosure, it is possible to predict the information related to a color difference between the printed image and the target image, which is generated in the print job, based on the information related to print paper.

According to the fifth aspect of the present disclosure, it is possible to predict the information related to a color difference between the printed image and the target image, which is generated in the print job, based on the information related to a printing apparatus.

According to the sixth aspect of the present disclosure, it is possible to predict the information related to a color difference between the printed image and the target image, which is generated in the print job, based on the information related to execution time of calibration executed immediately before.

According to the seventh aspect of the present disclosure, it is possible to predict the information related to a color difference between the printed image and the target image, which is generated in the print job, based on the information related to an environment for processing the print job.

According to the eighth aspect of the present disclosure, it is possible to predict the information related to a color difference between the printed image and the target image, which is generated in the print job, based on the information related to a color difference for each of the print jobs processed earlier.

According to the ninth aspect of the present disclosure, it is possible to recommend execution of calibration according to the information related to a color difference between the printed image and the target image, which is predicted for the print job to be newly processed and generated in a print job.

According to the tenth aspect of the present disclosure, it is possible to recommend execution of calibration according to the information related to a color difference between the printed image and the target image, which is predicted for each of print jobs to be newly and continuously processed and generated in a print job.

According to the eleventh aspect of the present disclosure, it is possible to select a timing at which calibration is performed.

According to the twelfth aspect of the present disclosure, it is possible to predict the information related to a color difference between the printed image and the target image, which is generated in the print job.

According to the thirteenth aspect of the present disclosure, it is possible to predict the information related to a color difference between the printed image and the target image, which is generated in the print job.

### BRIEF DESCRIPTION OF THE DRAWINGS

Exemplary embodiment(s) of the present invention will be described in detail based on the following figures, wherein:
Fig. 1 is a diagram showing a schematic configuration of an information processing system according to the present exemplary embodiment;
Fig. 2 is a block diagram showing a main configuration of electric systems of a printing apparatus in the information processing system according to the present exemplary embodiment;
Fig. 3 is a block diagram showing a main configuration of electric systems of a management apparatus and a client computer in the information processing system according to the present exemplary embodiment;
Fig. 4 is a functional block diagram showing a functional configuration of the client computer in the information processing system according to the present exemplary embodiment;
Fig. 5 is a diagram showing an example of a trained neural network model;
Fig. 6 is a flowchart showing an example of a flow of a training process performed by the client computer of the information processing system according to the present exemplary embodiment; and
Fig. 7 is a flowchart showing an example of a flow of an estimation process performed by the client computer of the information processing system according to the present exemplary embodiment.

### DETAILED DESCRIPTION OF THE INVENTION

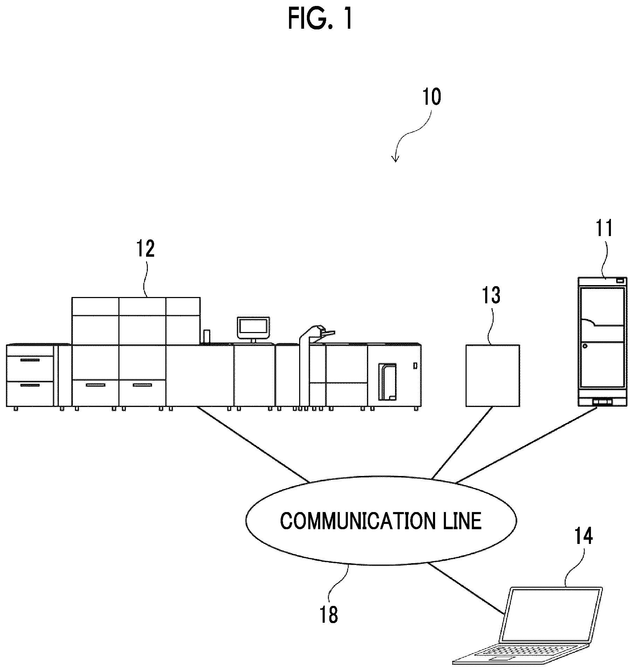

Hereinafter, an example of the present exemplary embodiment will be described in detail with reference to the drawings. In the present exemplary embodiment, an information processing system in which a management apparatus, a printing apparatus, a client computer, and the like are connected to each other via a communication line such as various networks is described as an example. Fig. 1 is a diagram showing a schematic configuration of an information processing system 10 according to the present exemplary embodiment.

As illustrated in Fig. 1, an information processing system 10 according to the present exemplary embodiment includes a management apparatus 11, a printing apparatus 12, an inspection apparatus 13, a client computer 14, and the like. The management apparatus 11, the printing apparatus 12, the inspection apparatus 13, and the client computer 14 are connected to each other via a communication line 18 such as a Local Area Network (LAN), a Wide Area Network (WAN), the Internet, an intranet, and the like. Then, each of the management apparatus 11, the printing apparatus 12, the inspection apparatus 13, and the client computer 14 can transmit and receive various data to and from each other via the communication line 18. In the present exemplary embodiment, printing is performed in the printing apparatus 12 in response to a printing instruction by giving a printing instruction to the printing apparatus 12 from the client computer 14 via the management apparatus 11.

In Fig. 1, one management apparatus 11, one printing apparatus 12, one inspection apparatus 13, and one client computer 14 are shown, but each of the apparatuses may be plural or any of the apparatuses may be plural.

The printing apparatus 12 according to the present exemplary embodiment has a plurality of functions such as a printing function of performing a printing process on a continuous paper and a post-treatment function of performing a post-treatment on printed paper. The plurality of functions may include a scanning function of scanning a manuscript to obtain image information indicating the manuscript, a duplicating function of duplicating an image recorded in the manuscript on paper, a facsimile function of transmitting and receiving various data via a telephone line (not shown), a transfer function of transferring manuscript information such as the image information scanned by the scanning function, and an accumulating function of accumulating the manuscript information such as the scanned image information.

In the following description, the facsimile function may be referred to as a fax, the scanning function may be referred to as a scan, the printing function may be referred to as a print, and the duplicating function may be referred to as a copy.

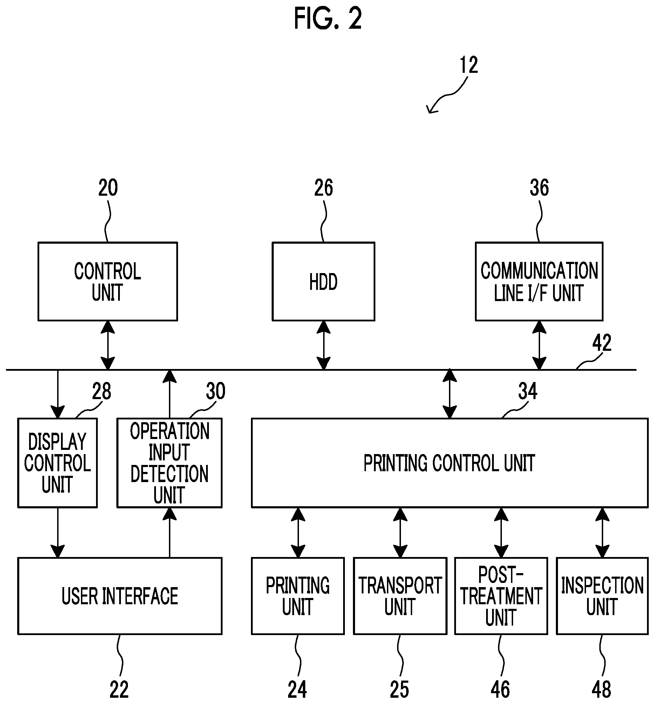

Fig. 2 is a block diagram showing a main configuration of electric systems of the printing apparatus 12 in the information processing system 10 according to the present exemplary embodiment.

As shown in Fig. 2, the printing apparatus 12 according to the present exemplary embodiment includes a control unit 20. The control unit 20 may include a Central Processing Unit (CPU), a Read Only Memory (ROM), and a Random Access Memory (RAM).

On the other hand, the printing apparatus 12 according to the present exemplary embodiment includes a Hard Disk Drive (HDD) 26 that stores various data, application programs, and the like. In addition, the printing apparatus 12 includes a display control unit 28 that is connected to a user interface 22 and controls the display of various operation screens and the like on the display of the user interface 22. Further, the printing apparatus 12 includes an operation input detection unit 30 that is connected to the user interface 22 and detects an operation instruction input via the user interface 22. In the printing apparatus 12, the HDD 26, the display control unit 28, and the operation input detection unit 30 are electrically connected to a system bus 42. In the printing apparatus 12 according to the present exemplary embodiment, the HDD 26 is applied as a storage unit, but the present disclosure is not limited thereto, and a non-volatile storage unit such as a flash memory may be applied. In addition, in the present exemplary embodiment, a touch panel that can perform display and operation input is applied to the user interface 22, but the present disclosure is not limited thereto, and a user interface in which a display and an operation unit are separate may be applied.

In addition, the printing apparatus 12 according to the present exemplary embodiment includes a printing control unit 34 that controls a printing process by the printing unit 24, the transport of the paper to the printing unit 24 by the transport unit 25, the post-treatment by the post-treatment unit 46, and a scanning process of the printed matter by the inspection unit 48. The printing apparatus 12 may include a scanning control unit that controls an optical image scanning operation by a manuscript scanning unit and a manuscript feeding operation by a manuscript transport unit. In addition, the printing apparatus 12 includes a communication line interface (I/F) unit 36 that is connected to the communication line 18 and transmits and receives communication data to and from other external apparatuses such as the client computer 14 connected to the communication line 18. Further, the printing apparatus 12 may include a facsimile interface (I/F) unit that is connected to a telephone line (not shown) and transmits and receives facsimile data to and from a facsimile apparatus connected to the telephone line. In addition, the printing apparatus 12 may include a transmission and reception control unit that controls transmission and reception of the facsimile data via the facsimile I/F unit. Moreover, in the printing apparatus 12, the printing control unit 34 and the communication line I/F unit 36 are electrically connected to a system bus 42.

With the above configuration, the printing apparatus 12 according to the present exemplary embodiment executes control of display of an operation screen and information, such as various messages, on the display of the user interface 22 via the display control unit 28 by the control unit 20. In addition, the printing apparatus 12 executes, by the control unit 20, each of the control of the operation of the printing unit 24, the transport unit 25, and the post-treatment unit 46 via the printing control unit 34, and the control of the transmission and reception of the communication data via the communication line I/F unit 36. Further, the printing apparatus 12 grasps operation content in the user interface 22 based on operation information, which is detected by the operation input detection unit 30, by the control unit 20 and executes various controls based on the operation content.

As an example of the applications stored in the HDD 26, in the present exemplary embodiment, an application that executes a function such as printing is included.

The inspection apparatus 13 inspects the printed matter by comparing a target image represented by the printing information with a printed image obtained by scanning the printed matter with the inspection unit 48 in a case where the printing apparatus 12 performs printing based on the printing information.

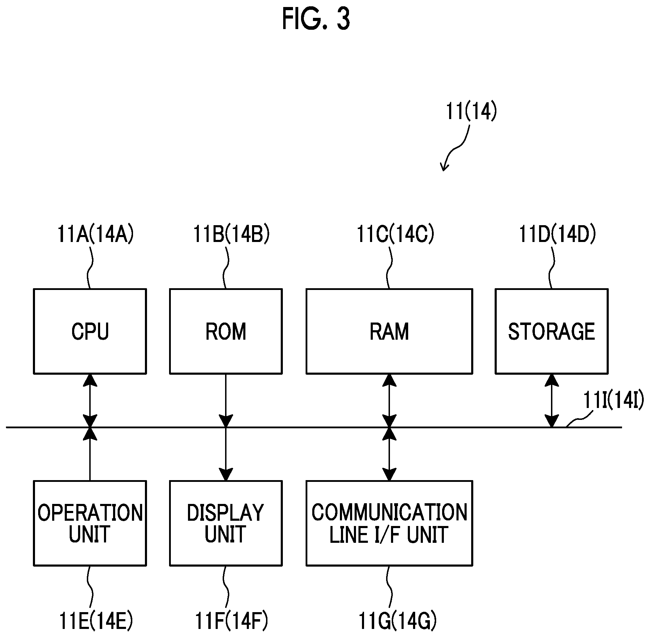

Subsequently, a main configuration of the electric systems of the management apparatus 11 and the client computer 14 according to the present exemplary embodiment will be described. Fig. 3 is a block diagram showing a main configuration of the electric systems of the management apparatus 11 and the client computer 14 in the information processing system 10 according to the present exemplary embodiment. Since the management apparatus 11 and the client computer 14 have a general computer configuration, the management apparatus 11 will be described below as a representative example.

As illustrated in Fig. 3, the management apparatus 11 according to the present exemplary embodiment includes a CPU 11A as an example of a processor, a ROM 11B, a RAM 11C, a storage 11D, an operation unit 11E, a display unit 11F, and a communication line interface (I/F) unit 11G. The CPU 11A administers the whole operation of the management apparatus 11. The ROM 11B stores various control programs, various parameters, and the like in advance. The RAM 11C is used as a work area or the like in a case where various programs are executed by the CPU 11A. The storage 11D stores various data, application programs, and the like. The operation unit 11E is used to input various types of information. The display unit 11F is used for display of the various types of information. The communication line I/F unit 11G is connected to the communication line 18 and transmits and receives various data to and from other apparatuses connected to the communication line 18. In addition, the communication line I/F unit 11G may have a configuration capable of directly communicating with each device by using various well-known wireless communications. Each of the units of the management apparatus 11 described above is electrically connected to each other by a system bus 11I. In the management apparatus 11 according to the present exemplary embodiment, the storage 11D is applied as a storage unit, but as an example of the storage, a non-volatile storage unit, such as a Hard Disk Drive (HDD) or a flash memory, is applied.

With such a configuration, in the management apparatus 11 according to the present exemplary embodiment, the CPU 11A executes accesses to the ROM 11B, the RAM 11C, and the storage 11D, acquisition of various types of data via the operation unit 11E, and display of various types of information on the display unit 11F. In addition, the management apparatus 11 executes control of transmission and reception of the communication data via the communication line I/F unit 11G by the CPU 11A.

In the information processing system 10 having the above-described configuration, the management apparatus 11 manages a series of manufacturing procedures. The series of manufacturing procedures includes, for example, a producing procedure, a pre-press procedure, a plate-making procedure, a printing procedure, a processing procedure, and a distribution procedure.

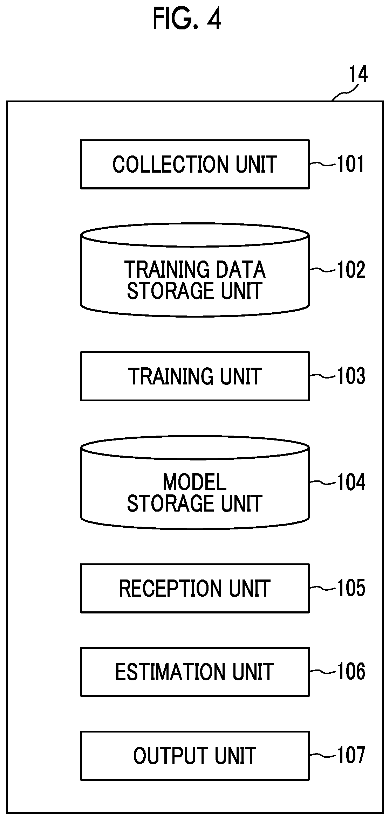

Next, a functional configuration of the client computer 14 will be described. Fig. 4 is a block diagram showing an example of the functional configuration of the client computer 14.

Functionally, as shown in Fig. 4, the client computer 14 is configured to include a collection unit 101, a training data storage unit 102, a training unit 103, a model storage unit 104, a reception unit 105, an estimation unit 106, and an output unit 107.

The collection unit 101 collects training data including a pair of input information including information related to an earlier print job and information related to a color difference between a printed image formed on a printed matter by execution of the earlier print job and a target image that is a printing target in the earlier print job.

The information related to a print job included in the input information may include information related to the target image that is a printing target in the print job. Specifically, the information related to a target image may include a raster image that is generated by being rasterized before printing.

The management apparatus 11 has history information for managing the information related to the earlier print job, manufacturing information, and an inspection history.

The collection unit 101 collects information related to a target image in the earlier print job from the history information of the management apparatus 11.

The information related to a print job included in the input information may include information related to a setting of the print job. Specifically, the information related to a setting of the print job may include information related to print paper. The information related to print paper may include, for example, a type of print paper or a color of print paper.

The collection unit 101 collects information related to the setting of the earlier print job from the history information of the management apparatus 11.

The information related to a print job included in the input information may include information related to the printing apparatus 12 that processes the print job. Specifically, the information related to the printing apparatus 12 may include information related to the configuration of the printing apparatus 12 or information related to the cumulative printing amount by the printing apparatus 12. The information related to the configuration of the printing apparatus 12 may include, for example, a distance over which the print paper is transported in the printing apparatus 12, a distance between the apparatuses in each procedure in the printing apparatus 12, an average distance, a total distance, or the type of the printing apparatus 12. The information related to the cumulative printing amount by the printing apparatus 12 may include, for example, the cumulative number of printed sheets by the printing apparatus 12, the cumulative printing area by the printing apparatus 12, and the like.

The collection unit 101 collects information related to the printing apparatus 12 that processes the earlier print job from the printing apparatus 12.

The information related to a print job included in the input information may include information related to execution time of calibration executed immediately before the earlier print job. Specifically, the information related to execution time of calibration may include the execution date and time of the calibration, the processing date and time of the earlier print job, or the elapsed time from the execution time of calibration executed immediately before to the processing time of the earlier print job.

The collection unit 101 collects information related to execution time of calibration executed immediately before the earlier print job from the history information of the management apparatus 11.

The information related to a print job included in the input information may include information related to an environment for processing the earlier print job. Specifically, the information related to the environment for processing the print job includes, for example, a temperature, a humidity, or the like.

The collection unit 101 collects information related to an environment for processing the earlier print job, from the sensor information of the printing apparatus 12 or the history information of the management apparatus 11.

The information related to a print job included in the input information may include information related to a color difference for each of the print jobs processed in the further earlier than the earlier print job. Specifically, the information related to a color difference for each of the print jobs processed earlier includes the information related to a color difference between the target image and the printed image obtained by the inspection apparatus 13 for each of the print jobs processed in an earlier certain period. The information related to a color difference includes, for example, an average of the color difference for each pixel, a maximum color difference, and the like.

The inspection history of the inspection apparatus 13 includes the information related to a color difference by the inspection apparatus 13 for each of the earlier print jobs.

The collection unit 101 collects the information related to a color difference for each of the print jobs processed further earlier than the earlier print job from the inspection information included in the inspection apparatus 13.

In addition, the collection unit 101 acquires the information related to a color difference in the earlier print job from the inspection information included in the inspection apparatus 13.

The training data storage unit 102 stores a plurality of pieces of training data collected by the collection unit 101.

The training unit 103 constructs a neural network model for estimating information related to a color difference in the earlier print job while using the input information related to the earlier print job based on a plurality of pieces of training data as input.

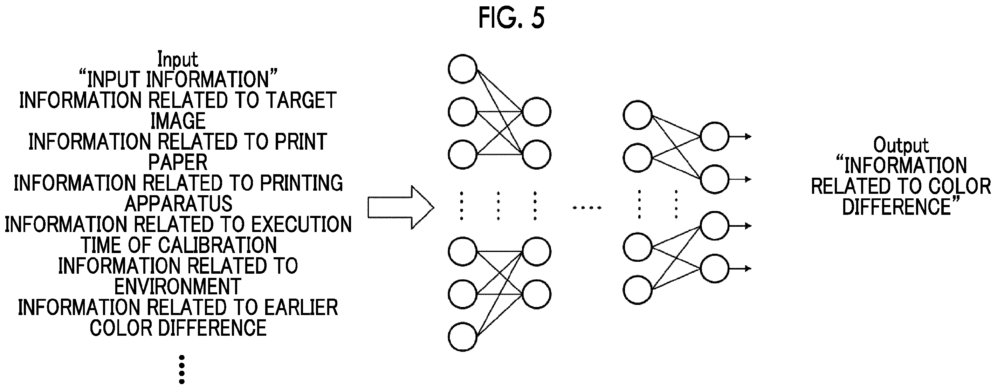

Specifically, the trained neural network model receives input of input information including at least one of the information related to a target image, the information related to print paper, the information related to the printing apparatus 12, the information related to execution time of calibration, the information related to an environment, or the information related to an earlier color difference, and outputs the information related to a color difference corresponding to the input information (see Fig. 5). As an example of a training algorithm, deep learning can be used, and, in a case where the input information of the training data is input, the neural network model may be constructed such that the information related to a color difference for the training data is output.

More specifically, the parameter of the model may be updated by estimating the input information of the training data as input and the information related to a color difference as output of the model, comparing the estimated information related to a color difference with the information related to a color difference of the training data, and calculating the error of the information related to a color difference, thereby minimizing the value of the error.

Here, a correlation between various types of information included in the input information and the information related to a color difference will be described.

First, since the color tone variation characteristics are different depending on the difference in the pixels or the density of the target image of the print job, the target image of the print job affects the color tone variation during printing. As described above, there is a correlation between the target image and the information related to a color difference.

Since the way of color application is different depending on the type or color of the print paper even for the same target image, the type or color of the print paper affects the color tone variation during printing. As described above, there is a correlation between the information related to print paper and the information related to a color difference.

Since the color tone variation characteristics are different depending on the configuration of the printing apparatus 12 to be used and the size of the cumulative printing amount, the configuration of the printing apparatus 12 and the cumulative printing amount affect the color tone variation during printing. As described above, there is a correlation between the information related to the printing apparatus 12 and the information related to a color difference.

As the time elapses from the execution time of the previous calibration, the color tone variation becomes larger. Thus, the execution time of the previous calibration affects the color tone variation during printing. As described above, there is a correlation between the information related to execution time of calibration and the information related to a color difference.

Since the printing characteristics such as the toner charging amount change depending on the temperature or humidity of the environment in which the printing apparatus 12 is installed, the temperature or humidity of the printing environment affects the color tone variation during printing. As described above, there is a correlation between the information related to the environment and the information related to a color difference.

In addition, by managing the tendency of the information related to a color difference for each print job, it is possible to predict how much the color difference is generated at the time of processing a subsequent print job. As described above, there is a correlation between the information related to the earlier color difference and the information related to a color difference.

The model storage unit 104 stores the trained neural network model.

The reception unit 105 receives input information related to a new print job to be estimated.

The input information may include information related to the target image that is a printing target in the print job. Specifically, the reception unit 105 receives the raster image in the print job, which is acquired from the management apparatus 11.

In addition, the input information may include information related to a setting of the print job. Specifically, the information related to a setting of the print job may include information related to print paper. The information related to print paper may include, for example, a type of print paper or a color of print paper. For example, the reception unit 105 receives the type of print paper "plain paper" or the color of print paper "white" in the print job, which is acquired from the management apparatus 11.

In addition, the input information may include information related to the printing apparatus 12 that processes the print job. Specifically, the information related to the printing apparatus 12 may include information related to the configuration of the printing apparatus 12 or information related to the cumulative printing amount by the printing apparatus 12. For example, the reception unit 105 receives information "the distance between the apparatuses is 10 m" related to the configuration of the printing apparatus 12, which is acquired from the printing apparatus 12, or information "1000 sheets" related to the cumulative printing amount by the printing apparatus 12.

In addition, the input information may include information related to execution time of calibration executed immediately before the print job. Specifically, the information related to the calibration execution time includes the execution date and time of the calibration, the processing date and time of the earlier print job, the elapsed time from the execution time of the calibration executed immediately before to the processing date and time of the earlier print job, and the like. For example, the reception unit 105 receives the execution date and time of the calibration executed immediately before the print job and the processing date and time of the print job, or the elapsed time from the execution time of the calibration executed immediately before, which are acquired from the management apparatus 11.

The input information may include information related to the environment for processing the print job. Specifically, the information related to the environment for processing the print job includes, for example, a temperature, a humidity, or the like. For example, the temperature "18 degrees" and the humidity "50%" acquired from the printing apparatus 12 are received.

The input information may include information related to a color difference for each of the print jobs processed earlier. Specifically, the information related to a color difference for each of the print jobs processed earlier includes the information related to a color difference between the target image and the printed image obtained by the inspection apparatus 13 for each of the print jobs processed in an earlier certain period. The information related to a color difference includes, for example, an average of the color difference for each pixel, a maximum color difference, and the like. For example, the reception unit 105 receives the average of the color difference for each pixel or a maximum color difference for each of the print jobs processed in an earlier certain period by the print job, which is acquired from the inspection apparatus 13.

The estimation unit 106 estimates the information related to a color difference corresponding to the received input information by using the trained neural network model stored in the model storage unit 104.

Specifically, various types of information included in the received input information are converted into a data structure (for example, a scalar value, a vector, and the like) that can be input to the trained neural network model to input to the trained neural network model, and the information related to a color difference is estimated from the output of the trained model.

The output unit 107 outputs a notification for recommending the execution of calibration based on a result of comparing the information related to the estimated color difference for the print job to be newly processed with a predetermined threshold value. Specifically, in a case where the information related to the estimated color difference exceeds the threshold value, the notification for recommending the execution of the calibration is output.

In the present exemplary embodiment, the estimation unit 106 inputs the input information related to the print job to the trained model for each of the plurality of print jobs to be newly and continuously processed to output the information related to a color difference. Then, the output unit 107 outputs a notification for recommending the execution of calibration based on the result of comparing the information related to the output color difference with a predetermined threshold value for each of the plurality of print jobs to be newly and continuously processed. In a case of outputting the notification recommending the execution of calibration, the output unit 107 outputs a screen for receiving a selection of whether to stop the process immediately before the print job in which the output information related to a color difference exceeding the threshold value or to recommend the execution of calibration before processing a plurality of print jobs to be newly and continuously processed. The above threshold value may be set by acquiring a threshold value set in the inspection apparatus 13.

Next, specific processing performed by each part of the information processing system 10 according to the present exemplary embodiment configured as described above will be described.

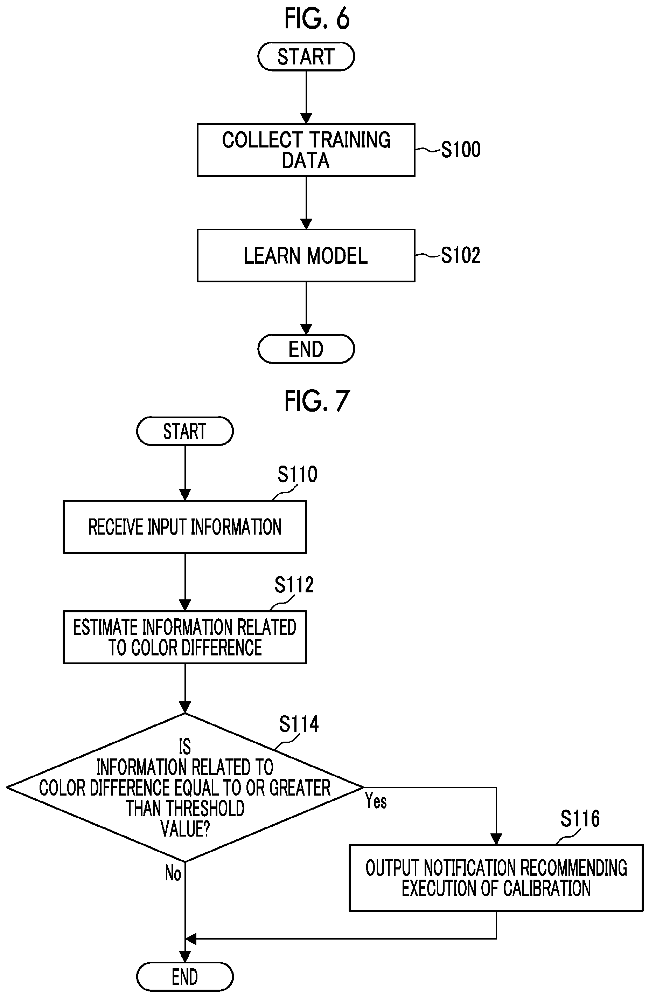

First, in the client computer 14, the CPU 14A reads out the training program from the ROM 14B or the storage 14D, and develops and executes the training program on the RAM 14C to perform a training process shown in Fig. 6.

In step S100, as the collection unit 101, the CPU 14A collects training data including a pair of input information related to the earlier print job and information related to a color difference corresponding to the earlier print job, and stores the training data in the training data storage unit 102.

In step S102, as the training unit 103, the CPU 14A learns the neural network model to estimate the information related to a color difference corresponding to the input information using the input information as input based on a plurality of training data, stores the trained neural network model in the model storage unit 104, and ends the training process.

Next, in the client computer 14, the CPU 14A reads out the estimation program from the ROM 14B or the storage 14D and develops and executes the estimation program in the RAM 14C, so that the estimation process shown in Fig. 7 is performed. Here, the estimation process is performed for each of the print jobs to be newly and continuously processed, which is registered as the job schedule. It is assumed that various types of information included in the input information related to the print job are input.

In step S110, as the reception unit 105, the CPU 14A receives the input information related to a print job to be estimated, which is input by the user.

In step S112, as the estimation unit 106, the CPU 14A estimates the information related to a color difference corresponding to the received input information by using the trained neural network model stored in the model storage unit 104.

In step S114, as the output unit 107, the CPU 14A determines whether or not the information related to the estimated color difference exceeds the threshold value. In a case where the information related to the estimated color difference does not exceed the threshold value, the estimation process ends. On the other hand, in a case where the information related to the estimated color difference exceeds the threshold value, the process proceeds to S116.

In step S116, as the output unit 107, the CPU 14A outputs a notification recommending the execution of calibration, and ends the estimation process.

By performing the process as described above, it is possible to predict the information related to a color difference between the printed image and the target image, which is generated in the print job before processing the print job. In addition, an optimum calibration timing may be proposed to the user.

### <Modification Example>

The present invention is not limited to the above-described exemplary embodiment, and various modifications and applications are possible without departing from the gist of the present invention.

For example, a case where the various information of the input information is received and the information related to a color difference is estimated has been described as an example, but the information related to a color difference may be estimated by receiving a part of the various information of the input information without receiving all of the various information of the input information.

In addition, although a case where the client computer 14 learns the model and estimates the information related to a color difference has been described as an example, a learning apparatus that learns the model and the estimation apparatus that estimates the information related to a color difference may be configured to be separate from each other.

In addition, the "system" in the present exemplary embodiment is described as an example of a system configured to include a plurality of apparatus, but may be configured to include a single apparatus having functions of some parts of the plurality of apparatus.

The processes performed by the printing apparatus 12 according to the above exemplary embodiment may be processes performed by software, processes performed by hardware, or a combination of both. In addition, the processes performed by the printing apparatus 12 may be stored in a storage medium as a program and distributed.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. In addition, the program of the present application may be provided as a program product.

In addition, the present disclosure is not limited to the above description, and various modifications other than the above description may be made without departing from the gist thereof.

Regarding the above exemplary embodiments, the following supplementary notes will be further disclosed.
(((1))) An information processing system comprising:
   a processor configured to:
   input new input information including information related to a print job to be newly processed to a trained model that is trained in advance to output, in a case where input information including information related to a print job is input, information related to a color difference between a printed image formed on a printed matter by executing the print job and a target image that is a printing target in the print job, and output information related to a color difference between a printed image formed by executing the print job to be newly processed and a target image that is a printing target in the print job to be newly processed.
(((2))) The information processing system according to (((1))),
   wherein the information related to a print job includes information related to the target image that is a printing target in the print job.
(((3))) The information processing system according to (((1))) or (((2))),
   wherein the information related to a print job includes information related to a setting of the print job.
(((4))) The information processing system according to any one of (((1))) to (((3))),
   wherein information related to a setting of the print job includes information related to print paper.
(((5))) The information processing system according to any one of (((1))) to (((4))),
   wherein the information related to a print job includes information related to a printing apparatus that processes the print job.
(((6))) The information processing system according to any one of (((1))) to (((5))),
   wherein the information related to a print job includes information related to execution time of calibration executed immediately before the print job.
(((7))) The information processing system according to any one of (((1))) to (((6))),
   wherein the information related to a print job includes information related to an environment for processing the print job.
(((8))) The information processing system according to any one of (((1))) to (((7))),
   wherein the information related to a print job includes information related to a color difference for each of print jobs processed earlier than the print job.
(((9))) The information processing system according to any one of (((1))) to (((8))), wherein the processor is further configured to:
   output a notification for recommending execution of calibration based on a result of comparing the information related to a color difference output for the newly processed print job with a predetermined threshold value.
(((10))) The information processing system according to any one of (((1))) to (((9))), wherein the processor is configured to:
   output the information related to a color difference by inputting the new input information to the trained model for each of a plurality of print jobs to be newly and continuously processed, and output a notification for recommending execution of calibration based on a result of comparing the output information related to a color difference with a predetermined threshold value for each of the plurality of print jobs to be newly and continuously processed.
(((11))) The information processing system according to (((10))), wherein the processor is configured to:
   in a case of outputting the notification for recommending execution of calibration, output a screen for receiving a selection of whether to stop a process immediately before the print job in which the output information related to a color difference exceeds the threshold value or to recommend execution of the calibration before processing the plurality of print jobs to be newly and continuously processed.
(((12))) An information processing program causing a computer to execute a process comprising:
   inputting new input information including information related to a print job to be newly processed to a trained model that is trained in advance to output, in a case where input information including information related to a print job is input, information related to a color difference between a printed image formed on a printed matter by executing the print job and a target image that is a printing target in the print job, and outputting information related to a color difference between a printed image formed by executing the print job to be newly processed and a target image that is a printing target in the print job to be newly processed.

According to (((1))), it is possible to predict the information related to a color difference between the printed image and the target image, which is generated in the print job.

According to (((2))), it is possible to predict the information related to a color difference between the printed image and the target image, which is generated in the print job, based on the information related to the target image that is a printing target in the print job.

According to (((3))), it is possible to predict the information related to a color difference between the printed image and the target image, which is generated in the print job, based on the information related to a setting of the print job.

According to (((4))), it is possible to predict the information related to a color difference between the printed image and the target image, which is generated in the print job, based on the information related to print paper.

According to (((5))), it is possible to predict the information related to a color difference between the printed image and the target image, which is generated in the print job, based on the information related to a printing apparatus.

According to (((6))), it is possible to predict the information related to a color difference between the printed image and the target image, which is generated in the print job, based on the information related to execution time of calibration executed immediately before.

According to (((7))), it is possible to predict the information related to a color difference between the printed image and the target image, which is generated in the print job, based on the information related to an environment for processing the print job.

According to (((8))), it is possible to predict the information related to a color difference between the printed image and the target image, which is generated in the print job, based on the information related to a color difference for each of the print jobs processed earlier.

According to (((9))), it is possible to recommend execution of calibration according to the information related to a color difference between the printed image and the target image, which is predicted for the print job to be newly processed and generated in a print job.

According to (((10))), it is possible to recommend execution of calibration according to the information related to a color difference between the printed image and the target image, which is predicted for each of print jobs to be newly and continuously processed and generated in a print job.

According to (((11))), it is possible to select a timing at which calibration is performed.

According to (((12))), it is possible to predict the information related to a color difference between the printed image and the target image, which is generated in the print job.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing system
11: management apparatus
12: printing apparatus
13: inspection apparatus
14: client computer
101: collection unit
102: training data storage unit
103: training unit
104: model storage unit
105: reception unit
106: estimation unit
107: output unit

## Claims

1. An information processing system comprising:
a processor configured to:
input new input information including information related to a print job to be newly processed to a trained model that is trained in advance to output, in a case where input information including information related to a print job is input, information related to a color difference between a printed image formed on a printed matter by executing the print job and a target image that is a printing target in the print job, and output information related to a color difference between a printed image formed by executing the print job to be newly processed and a target image that is a printing target in the print job to be newly processed.

2. The information processing system according to claim 1,
wherein the information related to a print job includes information related to the target image that is a printing target in the print job.

3. The information processing system according to claim 1 or 2,
wherein the information related to a print job includes information related to a setting of the print job.

4. The information processing system according to any one of claims 1 to 3,
wherein information related to a setting of the print job includes information related to print paper.

5. The information processing system according to any one of claims 1 to 4,
wherein the information related to a print job includes information related to a printing apparatus that processes the print job.

6. The information processing system according to any one of claims 1 to 5,
wherein the information related to a print job includes information related to execution time of calibration executed immediately before the print job.

7. The information processing system according to any one of claims 1 to 6,
wherein the information related to a print job includes information related to an environment for processing the print job.

8. The information processing system according to any one of claims 1 to 7,
wherein the information related to a print job includes information related to a color difference for each of print jobs processed earlier than the print job.

9. The information processing system according to any one of claims 1 to 8, wherein the processor is further configured to:
output a notification for recommending execution of calibration based on a result of comparing the information related to a color difference output for the newly processed print job with a predetermined threshold value.

10. The information processing system according to any one of claims 1 to 9, wherein the processor is configured to:
output the information related to a color difference by inputting the new input information to the trained model for each of a plurality of print jobs to be newly and continuously processed, and output a notification for recommending execution of calibration based on a result of comparing the output information related to a color difference with a predetermined threshold value for each of the plurality of print jobs to be newly and continuously processed.

11. The information processing system according to claim 10, wherein the processor is configured to:
in a case of outputting the notification for recommending execution of calibration, output a screen for receiving a selection of whether to stop a process immediately before the print job in which the output information related to a color difference exceeds the threshold value or to recommend execution of the calibration before processing the plurality of print jobs to be newly and continuously processed.

12. An information processing program causing a computer to execute a process comprising:
inputting new input information including information related to a print job to be newly processed to a trained model that is trained in advance to output, in a case where input information including information related to a print job is input, information related to a color difference between a printed image formed on a printed matter by executing the print job and a target image that is a printing target in the print job, and outputting information related to a color difference between a printed image formed by executing the print job to be newly processed and a target image that is a printing target in the print job to be newly processed.

13. An information processing method comprising:
inputting new input information including information related to a print job to be newly processed to a trained model that is trained in advance to output, in a case where input information including information related to a print job is input, information related to a color difference between a printed image formed on a printed matter by executing the print job and a target image that is a printing target in the print job, and outputting information related to a color difference between a printed image formed by executing the print job to be newly processed and a target image that is a printing target in the print job to be newly processed.
